# EUROPEAN PATENT APPLICATION

(11) **EP 1 359 778 A1**
(43) Date of publication of application: **05.11.2003**
(21) Application number: 03009161.5
(22) Date of filing: 22.04.2003
(51) Int. Cl.: H04Q 7/32

(54) **System, method and station for use in secure communication**

(30) Priority: 03.05.2002 GB 0210211
(71) Applicant: MOTOROLA, INC., Schaumburg, IL 60196 (US)
(72) Inventor: Firth, James Dalton, Basingstoke, Hampshire RG22 4PD (GB)
(74) Representative: McCormack, Derek James

(57) **Abstract**

An encrypted wireless communication system is described. The system comprises:
(i) a plurality of information carriers, each holding a user identification code; and
(ii) a plurality of communication stations each operable to make encrypted communications between itself and another station, each station including:
   means for receiving wirelessly from one of the plurality of information carriers authentication data for authentication of encrypted communication by the user associated with the information carrier using that station;
   means for processing the authentication data;
   and means for transmitting to another station wireless communications using an encryption key and for receiving from another station communications using a decryption key;
wherein the means for processing the authentication data is operable to translate using a translation key a representation of an encryption key and a decryption key transferred from the information carrier, the translation key being a secret key held by each of the plurality of stations, the key produced by the translation being an encryption key usable by the station. A method and station for use in secure communication in the system are also described.

## Description

### Field of the Invention

This invention relates to secure communication and particularly, though not exclusively, to secure communication in digital radio and telephony systems such as radio and telephony systems such as TETRA (TErrestrial Trunked RAdio) amongst others.

### Background of the Invention

In the field of this invention it is known to use end-to-end encryption, which makes use of a personal secure encryption key(s) traditionally stored in a user's telephony equipment, either permanently or on removable storage, such as a SIM (Subscriber Identity Module) card.

However, this approach has the disadvantage(s) that the key(s) exist within the equipment, either permanently or temporarily on removable storage, such that:
- there is scope for unauthorised use if the equipment is misplaced, and;
- if the equipment should become unusable (e.g., through operational fault or loss of battery charge), the authorised user must acquire new equipment and ensure that their personal secure key(s) are transferred to the new equipment; this process could be an intricate task, especially with hand-held portable equipment using traditional methods (key entry or SIM card replacement).

A need therefore exists for secure communication wherein the abovementioned disadvantage(s) may be alleviated.

### Summary of Invention

In accordance with a first aspect of the present invention there is provided an encrypted communication system comprising:
a plurality of information carriers for each holding respective pairs of encryption and decryption keys, the pairs of encryption and decryption keys in the plurality of information carriers being encrypted by the same predetermined key; and
a plurality of stations including a first station having:
   means for receiving wirelessly from one of the plurality of information carriers an encrypted pair of keys, the pair of keys comprising an encryption key and a decryption key, and for recovering therefrom a first encryption key and a first decryption key;
   means for transferring through the system to a second station of the plurality of stations the first encryption key; and
   means for receiving through the system from the second station information encrypted with the first encryption key, and for decrypting it with the first decryption key, to enable secure communication from
   the second station to the first station.

In accordance with a second aspect of the present invention there is provided a method for encrypted communication in an communication system, the method comprising:
providing an information carrier for holding a pair of encryption and decryption keys, the pair of encryption and decryption keys in the information carrier being encrypted by the same predetermined key; and
at a first station of a plurality of stations:
   receiving wirelessly from the information carrier an encrypted pair of keys, the pair of keys comprising an encryption key and a decryption key, and recovering therefrom a first encryption key and a first decryption key;
   transferring through the system to a second station of the plurality of stations the first encryption key; and
   receiving through the system from the second station information encrypted with the first encryption key, and
   decrypting it with the first decryption key, to produce encrypted communication from the second station to the first station.

In accordance with a third aspect of the present invention there is provided a station for use in an encrypted communication system, the station comprising:
means for receiving wirelessly from an information carrier a pair of encryption and decryption keys encrypted by the same predetermined key, and for recovering therefrom a first encryption key and a first decryption key;
means for transferring through the system to a second station of the system the first encryption key; and
means for receiving through the system from the second station information encrypted with the first encryption key, and for decrypting it with the first decryption key, to produce encrypted communication from the second station to the station.

At least in its preferred form, the invention provides a mechanism for secure calls, even across a public network, without requiring each user to use the same piece of telephony equipment for each call, in a manner that is easy to use.

A system, method and station for use in secure telephonic communication using wireless smart card devices and incorporating embodiments of the present invention will now be described, by way of example only, with reference to the accompanying drawings, in which:

### Brief Description of the Drawings

FIG. 1 shows a TETRA system employing telephony encryption using wireless smart card devices incorporating the present invention;
FIG. 2 shows a block-schematic diagram illustrating two mobile stations of the system of FIG. 1, arranged for secure communication in accordance with the present invention;
FIG. 3 shows a message sequence chart illustrating secure call setup in the system of FIG. 1; and
FIG. 4 shows a message sequence chart illustrating secure call data exchange in the system of FIG. 1.

### Description of Preferred Embodiments

It should be noted that, as used herein, the terms 'smart card' and particularly 'wireless smart card' refer to the embedded technology inherent in smart cards and do not necessarily require the presence or physical form of a card.

Briefly stated, in its preferred form this invention uses wireless smart card technology to provide secure end-to-end encryption for any telephony network. The user's personal secure key(s) that are used when making encrypted calls (voice or data) are stored on a smart card. The keys are accessed by the user's telephony equipment, but not stored by the equipment for any longer than the duration of each call, thereby overcoming some of the drawbacks of existing methods.

This invention is described in terms of an example digital Private Mobile Radio (PMR) network, utilising some of the security features that already exist in established protocols, such as TETRA (TErrestrial Trunked RAdio) as defined in the standards laid down by the ETSI (European Telecommunications Standards Institution), namely subscriber registration and authentication with the Central Network Equipment (trunked system network infrastructure). The principal benefits of the invention do not require either of these features; they are shown because it is envisaged that the invention will be particularly useful in systems with such features.

This invention does not introduce any new encryption algorithms. An existing algorithm with separate encryption and decryption sub-keys may be used, such as IDEA (see the publication by X. Lai and J. Massey, titled "A Proposal for a New Block Encryption Standard," Advances in Cryptology - EUROCRYPT'90 Proceedings, Berlin: Springer-Verlag, 1991, pp. 389-404). As is well-known in public key cryptography, knowledge of the encryption sub-key does not prejudice the cipher, allowing the encryption sub-key to be distributed in clear-text.

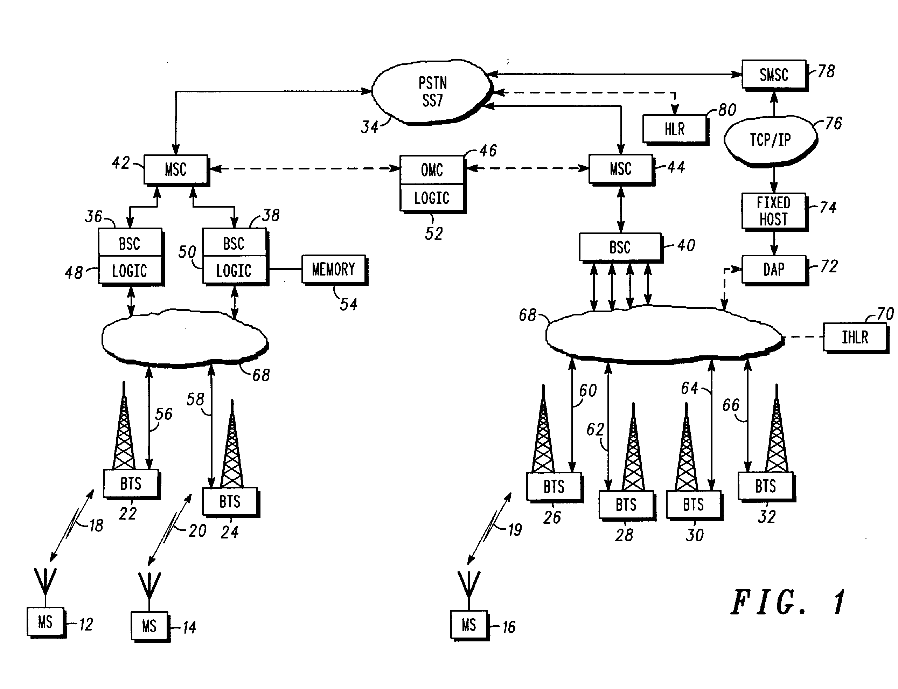

FIG. 1 shows, in outline, a trunked radio communications system 10 supporting a TETRA air-interface. Generally, the air-interface protocol is administered from base sites that are geographically spaced apart - one base site supporting a cell (or, for example, sectors of a cell) in a known manner.

A plurality of subscriber units, such as a mixture of MSs 12-16 and fixed terminals (not shown), communicate over the selected air-interface 18-20 with a plurality of base transceiver stations (BTS) 22-32. For clarity purposes only a limited number of MSs 12-16 and BTSs 22-32 are shown. The BTSs 22-32 may be connected to a conventional public-switched telephone network (PSTN) 34 through base station controllers (BSCs) 36-40 and mobile switching centres (MSCs) 42-44.

Each BTS 22-32 is principally designed to serve its primary cell, with each BTS 22-32 containing one or more transceivers. The BTSs 22-32 communicate 56-66 with the rest of the trunking system infrastructure via a frame relay interface 68. In general, the iHLR function 70 communicates directly with the dispatch application processor (DAP) 72. The iHLR function 70 is the database for all subscribers with respect to dispatch services.

Each BSC 36-40 may control one or more BTSs 22-32, with BSCs 36-40 generally interconnected through MSCs 42-44. Each BSC 36-40 is therefore able to communicate with one another, if desired, to pass system administration information therebetween, with BSCs 36-40 responsible for establishing and maintaining control channel and traffic channels to serviceable MSs 12-16 affiliated therewith. The interconnection of BSCs 36-40 therefore allows the trunked radio communication system to support handover of the MSs 12-16 between cells.

Each MSC 42-44 provides a gateway to the PSTN 34, with MSCs 42-44 interconnected through an operations and management centre (OMC) that administers general control of the trunked radio system 10, as will be understood by those skilled in the art. The various system elements, such as BSCs 36-38 and OMC 46, will include control logic 48-52, with the various system elements usually having associated memory 54 (shown only in relation to BSC 38 for the sake of clarity). The memory typically stores historically compiled operational data as well as in-call data, system information and control algorithms.

In addition to the connections to the PSTN 34 (or SS7 in a cellular network), the MSs 12-16 and BTS 22-32 can obtain system specific information via the DAP 72. The DAP 72 is the dispatch primary control network element, which, amongst other functions, manages the services, provisioning, location management and billing of dispatch-type services.

The DAP 72 may be connected to a fixed host 74 that provides many application-specific functions to the trunking network. The fixed host may be any TCP/IP based application that can send or receive short data messages, namely providing a fixed wire-line access point for group SDS messages.

The fixed host 74 is connected to a short message service centre (SMSC) 78 via a transfer control protocol (TCP)/internet protocol (IP) interface. The SMSC 78 is a standard piece of GSM equipment that is responsible for delivering point-to-point SDS messages within a cellular telecommunications environment. It is a database with SS7 protocol stacks layered upon it. The SMSC 78 is also connected to the PSTN 34, which is operably coupled to home location register (HLR) 80.

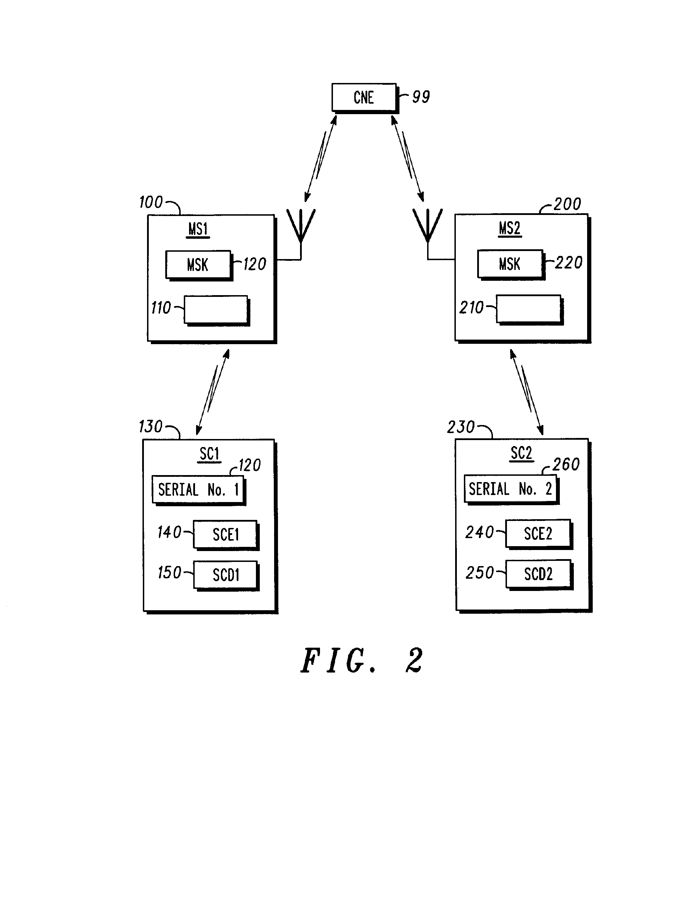

Referring now to FIG. 2, whose operation will be explained in more detail below, two mobile stations 100 (MS1), 200 (MS2) - such as the mobile stations 12, 14 and 16 - of the system each have a smart card reader (in the present example an embedded wireless smart card reader) 110, 210 and hold a secret encryption key MSK in memory 120, 220. The same secret encryption key MSK is held securely by all mobile stations within a predetermined user group, and is known only to the group owner. As will be described in greater detail below, the mobile stations 100 and 200 communicate via Central Network Equipment (CNE) 99 of the system of FIG. 1.

At, or proximate to, each of the mobile stations 100, 200 the respective user has a wireless smart card 130 (SC1), 230 (SC2). The smart card 130, 230 holds a representation of the respective user's secure encryption key SCE1, SCE2 in memory 140, 240, a representation of the respective user's secure decryption key SCD1, SCD2 in memory 150, 250 and a respective card serial number SerialNo1, SerialNo2 in memory 160, 260. The card serial number (SerialNo1, SerialNo2) is a non-secret unique identifier for each smart card; this number can be unrelated to SCE and SCD.

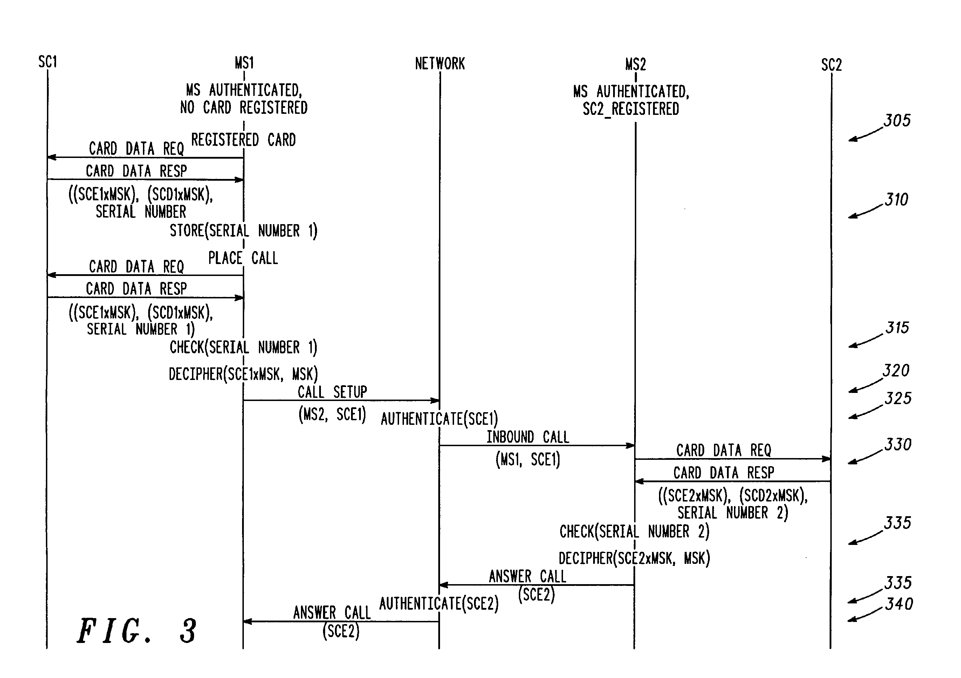

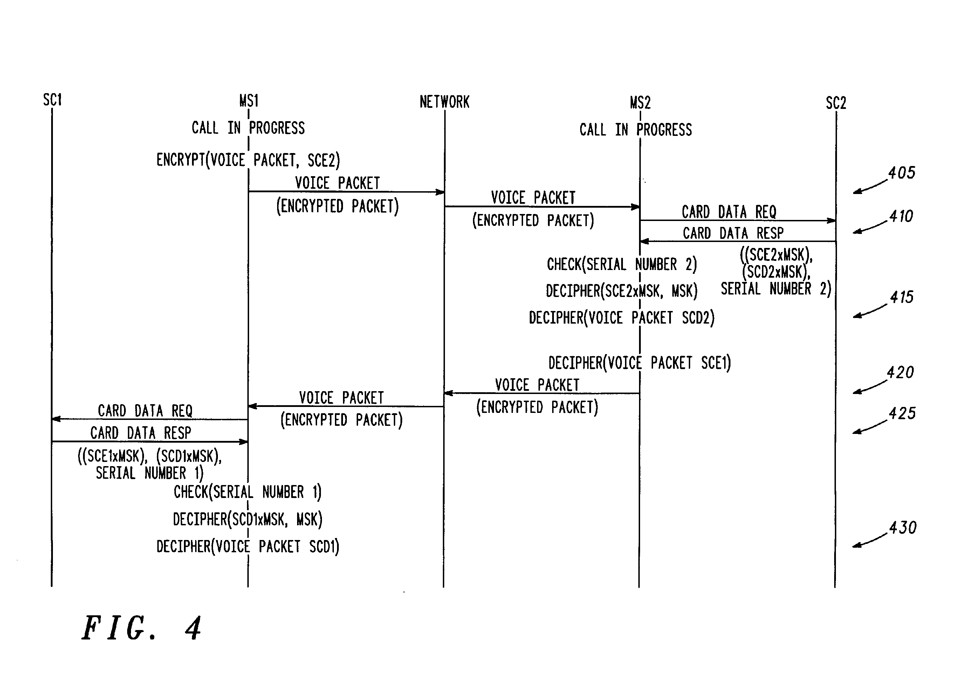

Referring now to FIG. 3 and FIG. 4, in a User Group (a set of users participating in a call) including User 1 at the mobile station 100 (MS1) and User 2 at the mobile station 200 (MS2), secure communication operates as follows.

The user wears the Smart Card in a suitable location about their person, which is within range of the telephony equipment of the mobile station. The range will depend upon the specific type of card used. The information held on the smart cards is encrypted with the encryption key MSK, in order to ensure security of the information if an unauthorised user should acquire the card.

The smart card reader (e.g., 110 and 210) in each of the user group's mobile stations (e.g., 100 and 200) is preprogrammed with the key MSK. Several groups with the same owner may opt to use the same MSK.

The user's smart card holds the encryption (SCE) and decryption (SCD) cipher keys for a user, encrypted themselves using MSK. SCE can also be used to uniquely identify the user and could be commonly known as the user's "public" key. The smart card itself has no knowledge of MSK.

Before using any secure features, the user is required to hold their smart card close to the MS and activate the registration function of the MS in order to register that card with the MS. The registration procedure requires the card to be closer to the MS than for use during a call, since there may be several users in close proximity. The registration function itself may, for example, be enacted by a push button or selection of a menu option at the mobile station.

During registration, the mobile station stores the card serial number (SerialNo1, SerialNo2), which then allows the mobile station to identify the correct smart card when several users are in close proximity. Only one smart card may be registered with a mobile station at any time, the smart card can be de-registered by either switching off the mobile station, using an explicit de-registration function or by registering another smart card, which will replace the previous registration. When placing or receiving a secure call, the mobile station detects all smart cards in proximity of the radio, but only data from the registered card will be used. This will be distinguished using the unique card serial number.

In order to place a secure call, a user must be in possession of:
- a mobile station with a valid MSK, and
- a valid smart card, which is registered with the mobile station.

Briefly, User 1 initiates the call and the mobile station 100 (MS1) reads the encrypted representation of SCE from smart card 130 (SC1) and deciphers this using MSK to provide a clear version of SCE. The mobile station 100 (MS1) uses SCE as the public key to place the secure call. The mobile station does not check the validity of SCE nor whether it is compatible with MSK. For additional security, the CNE may check that SCE is valid before establishing the call with the mobile station 200 (MS2), thereby validating both User 1 and the mobile station 100 (MS1), since both MSK and the encrypted SCE must be valid to provide SCE.

The mobile station 100 (MS1) and the mobile station 200 (MS2) exchange encryption (public) keys via the CNE. Traditional authentication and air interface security mechanisms allow the mobile stations to trust communications with the CNE and prevent an eavesdropper intercepting the encryption key and replacing it with their own.

The mobile station 100 (MS1) encrypts outbound voice and data using SCE from the mobile station 200 (MS2) and vice-versa. Each mobile station reads the encrypted SCD from its registered smart card and uses MSK to provide a clear version, which is then used to decipher all inbound data, but is not stored by the MS for any longer than the duration of the call.

Referring now to FIG. 3, the Call Set Up procedure is performed (in greater detail) as follows.

With the mobile station authenticated and the smart card 230 (SC2) registered at mobile station 200 (MS2), and with the mobile station authenticated but no smart card registered at mobile station 100 (MS1), the mobile station 100 (MS1) proceeds to register smart card 100 (SC1) - step 305. The mobile station 100 (MS1) then sends a card data request, receives a card data response including the smart card encryption key SCE1 encrypted with MSK, the smart card decryption key SCD1 encrypted with MSK, and the card serial number (SerialNo1), and stores SerialNol - step 310.

The mobile station 100 (MS1) then proceeds to place the call, sending a card data request, receiving a card data response including the smart card encryption key SCE1 encrypted with MSK, the smart card decryption key SCD1 encrypted with MSK, and the card serial number (SerialNo1). The mobile station 100 (MS1) checks the received smart card number with that previously stored and proceeds to decrypt (decipher) the smart card encryption key SCE1 using MSK - step 315. The mobile station 100 (MS1) then sends a call set up request (containing MS2 and SCE1) to the network - step 320.

The network authenticates SCE1 and sends to the mobile station 200 (MS2) an inbound call request containing MS1 and SCE1 - step 325. The mobile station 200 (MS2) then sends a card data request to the smart card 230 and receives therefrom a card data response containing SCE2 (encrypted with MSK), SCD2 (encrypted with MSK) and the smart card serial number SerialNo2 - step 330. The mobile station 200 (MS2) then checks the received card serial number with that previously stored, deciphers SCE2 using MSK, and sends to the network an answer call message containing SCE2 - step 335. The network authenticates SCE2 and sends to the mobile station 100 (MS1) an answer call message SCE2 - step 340.

Referring now to FIG. 4, the secure call progresses with the mobile station 100 (MS1) encrypting a voice packet with SCE2 and sending the encrypted voice packet to the network, which sends on the encrypted voice packet to the mobile station 200 (MS2) - step 405. The mobile station 200 (MS2) sends to the smart card 230 (SC2) a card data request, and receives therefrom a card data response containing SCE2 (encrypted with MSK), SCD2 (encrypted with MSK), and the smart card serial number (SerialNo2)-step 410. The mobile station 200 (MS2) then checks the received SerialNo2 with that previously stored and deciphers SCD2 with MSK and then deciphers the received encrypted voice packet using the deciphered SCD2 - step 415.

For voice sent from mobile station 200 (MS2) to mobile station 100 (MS1), the mobile station 200 (MS2) encrypts a voice packet with SCE1 and sends the encrypted voice packet to the network, with sends the encrypted voice packet to the mobile station 100 (MS1) - step 420. The mobile station 100 (MS1) sends to the smart card 130 (SC1) a card data request, and receives therefrom a card data response containing SCE1 (encrypted with MSK), SCD1 (encrypted with MSK), and the smart card serial number (SerialNo1) - step 425. The mobile station 100 (MS1) then checks the received SerialNo1 with that previously stored and deciphers SCD1 with MSK and then deciphers the received encrypted voice packet using the deciphered SCD1 - step 425.

It should be noted that:
i) The data transfer from smart card to mobile station is low speed and unidirectional, making existing RF smart card technology suitable for this purpose.
ii) The smart card holds SCE and SCD encrypted with MSK, so even if the short-range communication between the card and the mobile station should be intercepted, it is not possible to place a call without a valid mobile station.
iii) MSK could be selected from a series rather than being a static number. Each mobile station could then hold a unique version of MSK, in which case the translated SCE will result in a key that uniquely identifies the mobile station and the user. This technique can be used to "disarm" MSK within a stolen MS without affecting other users in the group.
iv) If desired, the caller and called parties may advantageously have access to a digital transport medium with central validation (authorisation) of users prior to call set up.

It will be understood that the method and system for telephony encryption using wireless smart card devices described above provides the following advantages:
Firstly, an extra guard is provided against an unauthorised user placing or receiving a secure call, since the smart card holding the personal secure key(s) is kept physically separate from the telephony station used to place the call. The telephony station does not store these key(s) for any longer than the duration of each call. Neither the telephony station or the user card alone can provide access to secure features - both are needed.
Secondly, the invention provides ease of use, especially where hand-held portable equipment is used. The user can easily change radios but still retain privileged access to secure calls as before.

These advantages may be particularly relevant to military and police forces, where security is required yet radio units are not always used by the same user.

## Claims

1. An encrypted wireless communication system comprising:
(i) a plurality of information carriers, each holding a user identification code; and
(ii) a plurality of communication stations each operable to make encrypted communications between itself and another station, each station including:
means for receiving wirelessly from one of the plurality of information carriers authentication data for authentication of encrypted communication by the user associated with the information carrier using that station;
means for processing the authentication data;
and means for transmitting to another station wireless communications using an encryption key and for receiving from another station communications using a decryption key;
wherein the means for processing the authentication data is operable to translate using a translation key a representation of an encryption key and a decryption key transferred from the information carrier, the translation key being a secret key held by each of the plurality of stations, the key produced by the translation being an encryption key usable by the station.

2. An encrypted wireless communication system according to claim 1 wherein a first of the stations includes:
means for transferring to a second station the encryption key to be used by the first station.

3. A system according to claim 1 or claim 2 wherein the first station includes means for receiving from the second station an encryption key to be used by the second station.

4. A system according to any one of the preceding claims which includes also a system infrastructure through which communications between stations are routed, wherein the the infrastructure includes an authentication means which is operable to check that each station and each user of the station as indicated by a user code transferred from an information carrier are registered for use by the system.

5. A system according to claim 4 and wherein the system is operable to carry out the check prior to communication call set-up.

6. A system according to any one of the preceding claims, wherein each of the plurality of information carriers is adapted to hold a respective unique identifier and the means in each station for receiving in from one of the plurality of information carriers comprises means for receiving the unique identifier.

7. A system according to any one of the preceding claims wherein the information carriers comprise wireless smart cards, and the means for receiving from one of the plurality of information carriers comprises a wireless smart card reader.

8. The system of any one of the preceding claims wherein each of the stations is operable to send to one or more of the other stations information encrypted using the encryption key comprises voice information.

9. A system according to any one of the preceding claims wherein the encryption key comprises a unique secret key selected from a series, the relationship between keys in the series allowing identification of a user and a station being used.

10. A system according to any one of the preceding claims wherein the stations comprise mobile wireless communication stations.

11. A system according to claim 10 wherein the wireless communication system comprises a system operating in accordance with TETRA standard procedures.

12. A method for encrypted communication in a communication system, the method comprising:
wirelessly transferring from an information carrier to a communication station user authenticatication information; and generating and sending from the station to another station an encrypted wireless communication by using the user authentication data, wherein the generating and sending includes processing the authentication data received from an information carrier to obtain a representation of an encryption key and a decryption key and translating the representation using a translation key which is a key held by the station to produce an encryption key usable by the station.

13. A mobile wireless communication operable using the method according to claim 12 and/or in the system according to any one of claims 1 to 11.
